# EUROPÄISCHE PATENTSCHRIFT

(11) **EP 2 804 251 B1**
(45) Veröffentlichungstag und Bekanntmachung des Hinweises auf die Patenterteilung: **20.07.2016**
(21) Anmeldenummer: 13165149.9
(22) Anmeldetag: 24.04.2013
(51) Int. Cl.: H01M 10/613, H01M 10/625, H01M 10/6556

(54) **Fahrzeugbatteriesystem**
Vehicle battery system
Système de batterie de véhicule

(43) Veröffentlichungstag der Anmeldung: 19.11.2014
(73) Patentinhaber: Samsung SDI Co., Ltd., Yongin-si, Gyeonggi-do (KR)
(72) Erfinder: FABIAN, Harald, 8510 Stainz (AT); KOJC, Miran, 2000 Maribor (SI); LOBNIK, Boris, 2000 Maribor (SI); MATL, Volker, 8010 Graz (AT)
(74) Vertreter: Gulde & Partner

(56) Entgegenhaltungen:
- EP-A1- 2 654 120
- WO-A1-2012/029270
- DE-A1- 10 238 235
- DE-A1-102010 014 915

## Beschreibung

Die vorliegende Erfindung betrifft ein Fahrzeugbatteriesystem umfassend eine Fahrzeugbatterie mit mehreren Batteriezellen und eine Kühlvorrichtung zur Kühlung der Fahrzeugbatterie.

Derartige Fahrzeugbatteriesysteme werden insbesondere in Elektro- und Hybridfahrzeugen eingesetzt. Aus derartigen Batteriesystemen wird in kurzen Zeitabschnitten eine hohe Energiemenge abgeführt bzw. durch Rekuperation auch wieder zugeführt. Durch den Innenwiderstand der Batteriezellen erwärmen sich diese dabei, wodurch unter anderem die Lebensdauer der Batteriezellen verringert wird. Daher ist eine Kühlung der Batteriezellen erforderlich. Zur Kühlung werden üblicherweise Kühlkörper verwendet, wobei Kanäle im Inneren des Kühlkörpers von einem Kühlmittel durchströmt werden. Die Batteriezellen des Batteriesystems oder beispielsweise eines Moduls des Batteriesystems sind so am Kühlkörper angeordnet, dass ein guter thermischer Kontakt zwischen den Zellen und dem Kühlkörper besteht und so Wärme gut von den Batteriezellen auf den Kühlkörper übertragbar ist. Ein Kühlmittelverteiler dient zur Einleitung und Ausleitung des Kühlmittels in bzw. aus den Kanälen des Kühlkörpers.

In der DE 10 2010 014 915 A1 wird eine temperierbare Batterieanordnung beschrieben, in der jeder einzelne Durchgangskanal von einem aus fluiddichten Werkstoff gefertigten Schlauchabschnitt umgeben ist, wobei zwei Verteilereinheiten vorgesehen sind, die jeweils ein Volumen umschließen, in die wenigstens eine Leitung für ein Einleiten oder Ausleiten des Temperiermittels mündet, und die jeweils eine gleiche Anzahl n an nebeneinander, mit jeweils einem Abstand zueinander angeordneten Öffnungen aufweisen, und dass n Schlauchabschnitte derart zwischen beiden Verteileineinheiten angeordnet sind und jeweils eine der n Öffnungen der einen Verteilereinheit mit einer der n Öffnungen der anderen Verteilereinheit fluiddicht verbinden, so dass zwei benachbart angeordnete Schlauchabschnitte eine Aufnahmetasche bilden.

Eine Vorrichtung zur Kühlung einer Fahrzeugbatterie ist aus der DE 10 2008 027 293 A1 bekannt. Diese Vorrichtung umfasst einen Kühlkörper mit Kanälen zur Durchströmung mit einem Fluid, wobei elektrische Speicherelemente mit dem Kühlkörper in thermischem Kontakt stehen. Zur Verteilung des Fluids auf die Kanäle des Kühlkörpers ist endseitig am Kühlkörper ein Sammler vorgesehen. Die Verbindung zwischen Sammler und Kühlkörper wird durch Einstecken des Sammlers in Nuten des Kühlkörpers und nachfolgendes Verlöten in einem Lötofen hergestellt.

Aus der US 2011/0027640 A1 ist ein Batteriemodul bekannt mit einem extrudierten Gehäuse mit innenliegenden Kühlkanälen und einem Verteiler für das Kühlmedium, wobei der Verteiler mit dem Gehäuse verschweißt oder verlötet ist.

Die Herstellung einer Schweiß- oder Lötnaht ist mit einem hohen Fertigungsaufwand verbunden, da die Naht fluiddicht ausgeführt sein muss. Darüber hinaus kann sich durch den Wärmeeintrag beim Schweißen der Kühlkörper verziehen, so dass die Anbindung des Kühlkörpers an die Batteriezellen beeinträchtigt wird.

Aus der WO 2012/028298 A2 ist ein Kühlmodul bekannt mit einem Verteiler sowie einem Kühlkörper bestehend aus Kühlplatten und Hohlprofilen mit Kühlmittelpassagen. Die Hohlprofile können mit dem Verteiler unter anderem mittels Kleben verbunden werden.

Schließlich zeigt die FR 2642155 A1 eine Klebeschnittstelle an einem Wärmetauscher, wobei in eine Nut Klebstoff gefüllt ist. In die Nut ist ein Rohr eingesetzt.

Die EP 2654120 A1 beschreibt eine Vorrichtung zur Kühlung einer Fahrzeugbatterie, bei welcher ein Kühlmittelverteiler mit einem Kühlkörper verklebt ist. Die in den Kühlmittelverteiler hineinragenden Enden des Kühlkörpers sind einstufig ausgebildet.

Der bisher bekannte Stand der Technik lehrt jedoch nicht, wie eine Klebung für eine Kühlvorrichtung eines Fahrzeugbatteriesystems auszuführen ist, so dass eine andauernde Funktionalität der Kühlvorrichtung tatsächlich gegeben ist.

Es ist eine Aufgabe der Erfindung, ein verbessertes Fahrzeugbatteriesystem umfassend eine Fahrzeugbatterie mit mehreren Batteriezellen und eine Kühlvorrichtung zur Kühlung der Fahrzeugbatterie anzugeben, mit einer fluiddichten Verbindung zwischen Kühlkörper und Kühlmittelverteiler die leicht herstellbar ist und dabei eine gute Funktionalität der Kühlvorrichtung gewährleistet.

Die Lösung der Aufgabe erfolgt durch ein Fahrzeugbatteriesystem umfassend eine Fahrzeugbatterie mit mehreren Batteriezellen und eine Kühlvorrichtung zur Kühlung der Fahrzeugbatterie, wobei die Kühlvorrichtung einen Kühlkörper mit zumindest einem Kühlkanal zur Durchströmung mit einem Kühlmittel umfasst, wobei der Kühlkörper mit den Batteriezellen in thermischem Kontakt steht, so dass Wärme von den Batteriezellen auf den Kühlkörper übertragbar ist, wobei an zumindest einem Ende des Kühlkörpers ein Kühlmittelverteiler vorgesehen ist, wobei der Kühlmittelverteiler mit dem Kühlkörper verklebt ist, wobei der Kühlmittelverteiler zur Verklebung mit dem Kühlkörper einen Aufnahmebereich aufweist, wobei im Aufnahmebereich Klebstoff angebracht ist, wobei der Aufnahmebereich des Kühlmittelverteilers Anschlussenden des Kühlkörpers umgreift, wobei die Anschlussenden des Kühlkörpers durch Begrenzungen des Kühlkanals des Kühlkörpers gebildet werden, wobei die Stirnseiten der Begrenzungen des Kühlkanals Anschläge für den Kühlmittelverteiler bilden, sodass die Begrenzungen des Kühlkanals an Kontaktflächen am Kühlmittelverteiler anliegen, wobei Klebstoff im Aufnahmebereich des Kühlmittelverteilers lediglich, in Bezug auf den Kühlkanal, radial außerhalb der Kontaktflächen angebracht ist und die Stirnseiten der Begrenzungen des Kühlkanals radial zweistufig ausgebildet sind und die Kontaktflächen an den radial innenliegenden Stufen der Stirnseiten der Begrenzungen des Kühlkanals ausgebildet sind.

Bevorzugt weist ein Kühlkörper erfindungsgemäß mehrere Kühlkanäle auf, deren Anschlussenden vorteilhaft jeweils, wie für den zumindest einen Kühlkanal beschrieben, im Aufnahmebereich des Kühlmittelverteilers umgriffen werden.

"Radial" bezieht sich in der vorliegenden Patentschrift stets auf den oder die einzelnen Kühlkanäle des Kühlkörpers beziehungsweise auf deren zentrale Längsachse.

Der "Aufnahmebereich" des Kühlmittelverteilers kann selbstverständlich auch durch mehrere getrennte Aufnahmebereiche gebildet sein.

Durch die Klebeverbindung zwischen Kühlkörper und Kühlmittelverteiler wird der Kühlmittelverteiler einerseits mechanisch am Kühlkörper befestigt und andererseits die Fluid-Schnittstelle zwischen Kühlmittelverteiler und Kühlkörper abgedichtet.

Durch die Kontaktflächen wird einerseits die Positionierung des Kühlmittelverteilers in Bezug auf den Kühlkörper festgelegt, andererseits aber auch eine Abgrenzung der Klebeflächen zum Kühlkanal geschaffen.

Dadurch dass Klebstoff lediglich radial außerhalb der durch die Kontaktflächen geschaffenen Abgrenzungen angeordnet ist, wird vermieden, dass Klebstoff den Kühlkanal verengt oder verstopft und hierdurch die Funktionalität der Kühlvorrichtung beeinträchtigen kann.

Die Stirnseiten der Begrenzungen des Kühlkanals sind radial zweistufig ausgebildet und die Kontaktflächen an den radial innenliegenden Stufen der Stirnseiten der Begrenzungen des Kühlkanals ausgebildet. Hierdurch können auf einfache Weise radial außen liegende Freiräume für Klebstoff durch radial innenliegende Kontaktflächen ausgebildet werden.

Weiterbildungen der Erfindung sind in den abhängigen Ansprüchen, der Beschreibung sowie den beigefügten Zeichnungen angegeben.

Bevorzugt liegen die radial innenliegenden Stufen der Stirnseiten der Begrenzungen des Kühlkanals tiefer im Kühlkanal als die radial außenliegenden Stufen. Hierdurch bilden sich radial außenliegende Flächen der Begrenzungen des Kühlkanals die eine gute Klebefläche bieten.
Bevorzugt umgreift der Aufnahmebereich des Kühlmittelverteilers lediglich die außenliegenden Stufen der Stirnseiten der Begrenzungen des Kühlkanals sowohl von innen als auch von außen.
Bevorzugt ist Klebstoff innerhalb des Aufnahmebereiches des Kühlmittelverteilers an der Außenseite und/oder der Stirnseite der Begrenzungen des Kühlkanals des Kühlkörpers angebracht und an der Innenseite der außenliegenden Stufen der Stirnseiten der Begrenzungen des Kühlkanals. Besonders bevorzugt sind die äußeren Spalten zwischen den Außenseiten der Begrenzungen des Kühlkanals und den benachbarten Begrenzungen des Aufnahmebereichs des Kühlmittelverteilers breiter, als die inneren Spalten zwischen den Innenseiten der außenliegenden Stufen der Begrenzungen des Kühlkanals und den benachbarten Begrenzungen des Aufnahmebereichs des Kühlmittelverteilers. Hierdurch wird Klebstoff eher radial nach außen verdrängt als nach innen.

Besonders bevorzugt weist der Aufnahmebereich des Kühlmittelverteilers Rippen oder Stege zur Innenseite und/oder zur Außenseite und/oder zur Stirnseite und/oder zur Innenseiten der außenliegenden Stufen der Begrenzungen des Kühlkanals hin auf. Ein oder mehrere Rippen oder Stege, die in verschiedenen Höhen des Kühlmittelverteilers ausgebildet sind, definieren so einen Abstand zwischen den genannten Seitenbegrenzungen des Kühlkörpers und den benachbarten Flächen des Kühlmittelverteilers. Hierdurch wird die Ausrichtung zwischen Kühlkörper und Kühlmittelverteiler vorbestimmt, die Struktur gestärkt und werden Hohlräume zur Einbringung von Klebstoff definiert.

Bevorzugt sind nach außen, also vom Kühlmittelverteiler weg, zum Kühlkörper hin weisende Enden der Rippen oder Stege schräg und/oder verkürzt ausgeführt, so dass im durch die Schräge und/oder Verkürzung geschaffenen Freiraum am äußeren Ende der Rippen Klebstoff aufgenommen sein kann, zur Verhinderung von Leckagen über durchgehend nach außen, insbesondere ins Freie, geführte Rippen oder Stege.

Besonders bevorzugt ist der Kühlkörper plattenförmig ausgebildet.

Bevorzugt besteht der Kühlkörper aus Aluminium.

Insbesondere für Kühlkörper aus Aluminium ist bevorzugt zumindest ein Ende des Kühlkörpers, welches mit dem Kühlmittelverteiler verklebt ist, zumindest bereichsweise mit einer polyester-basierenden Lackbeschichtung versehen, um eine verbesserte Haftung des Klebstoffes am Kühlkörper zu erreichen und eine elektrische Isolation zwischen Batteriezellen und Kühlkörper zu gewährleisten. Dadurch entfällt eine sonst aufwändige Reinigung und Vorbehandlung der Aluminium-Oberflächen des Kühlkörpers.

Vorzugsweise besteht der Kühlmittelverteiler aus Kunststoff.

Weiters ist der Kühlmittelverteiler bevorzugt als Spritzgussteil ausgeführt.

Die Erfindung wird im Folgenden beispielhaft unter Bezugnahme auf die Zeichnungen beschrieben.
Fig. 1 ist eine schematische Darstellung einer Kühlvorrichtung zur Kühlung einer Fahrzeugbatterie von der Seite mit eingezeichneten Schnitten A-A und B-B.
Fig. 2 ist eine Schnittansicht einer erfindungsgemäßen Kühlvorrichtung gem. A-A der Fig. 1.
Fig. 3 ist eine Schnittansicht einer weiteren nicht erfindungsgemäßen Kühlvorrichtung gem. A-A der Fig. 1.
Fig. 4 ist eine Schnittansicht einer weiteren nicht erfindungsgemäßen Kühlvorrichtung gem. A-A der Fig. 1.
Fig. 5 ist eine Schnittansicht einer weiteren erfindungsgemäßen Kühlvorrichtung gem. A-A der Fig. 1.
Fig. 6 ist eine Schnittansicht einer erfindungsgemäßen Kühlvorrichtung gem. C-C der Fig. 5.
Fig. 7 ist eine Schnittansicht eines Kühlmittelverteilers gem. B-B der Fig. 1.
Fig. 8 ist eine Schnittansicht eines weiteren Kühlmittelverteilers entsprechend Fig. 7.

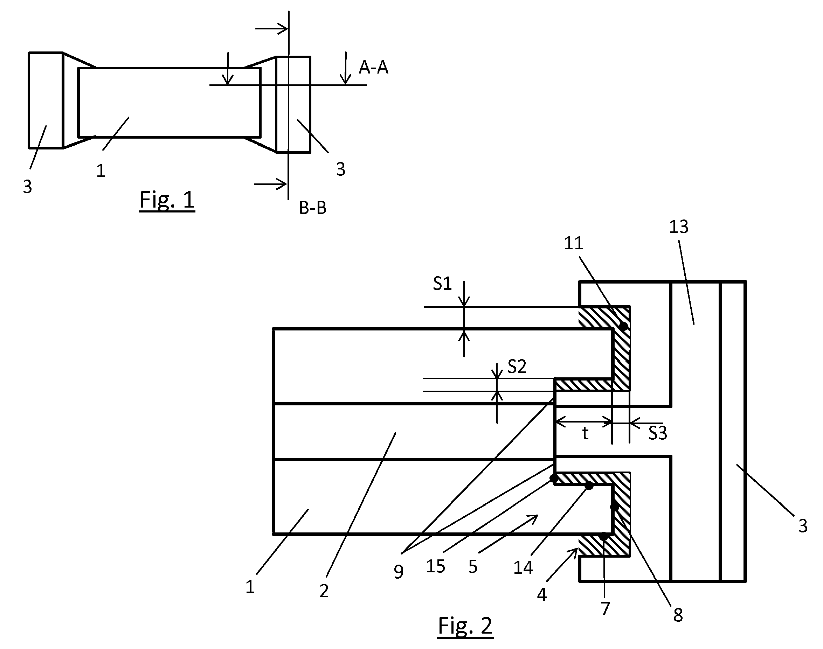

Fig. 1 zeigt zur besseren Übersicht eine schematische Darstellung einer Kühlvorrichtung zur Kühlung einer Fahrzeugbatterie in einer seitlichen Ansicht mit eingezeichneten Schnitten A-A und B-B. Die Kühlvorrichtung besteht im Wesentlichen aus dem plattenförmigen Kühlkörper 1, an dessen Enden Kühlmittelverteiler 3 angeordnet sind.

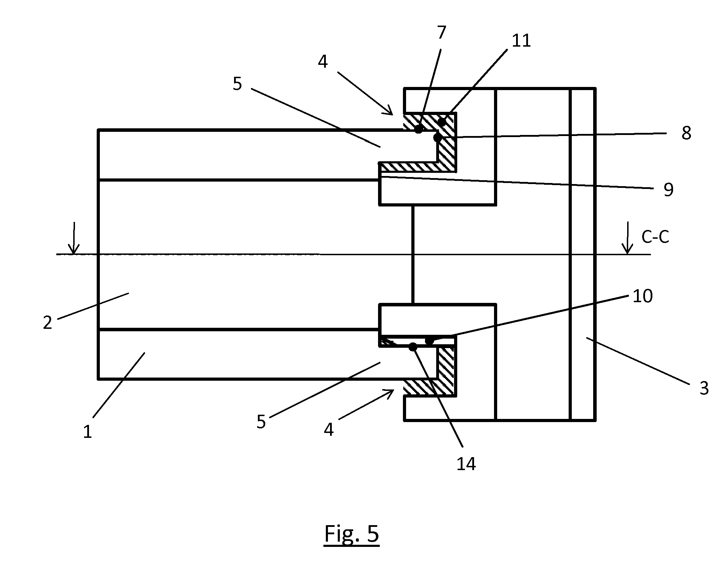

In den Fig. 2 und 5 sind Kühlvorrichtungen erfindungsgemäßer Fahrzeugbatteriesysteme in der Schnittansicht A-A gem. Fig. 1 dargestellt, umfassend einen plattenförmigen Kühlkörper 1 dessen Kühlkanäle 2 von einem Kühlmittel durchströmbar sind. An zumindest einem Ende des Kühlkörpers 1 ist dieser mit einem Kühlmittelverteiler 3 verbunden, so dass das Kühlmittel zwischen dem Kühlkanal 2 des Kühlkörpers 1 und einem Kanal im Kühlmittelverteiler 3 strömen kann. Der Kühlmittelverteiler 3 umgreift dabei im Aufnahmebereich 4 Anschlussenden 5, die am Kühlkörper 1 ausgebildet sind. Die Anschlussenden 5 werden durch Begrenzungen, also Ränder des Kühlkanals 2 gebildet. Die Anschlussenden 5 werden sowohl von innen als auch von außen im Aufnahmebereich 4 vom Kühlmittelverteiler 3 umfasst.

Zwischen dem Aufnahmebereich 4 des Kühlmittelverteilers 3 und den Stirnseiten 8 der Begrenzungen der Kühlkanäle 2 sind Anschläge mit Kontaktflächen 9 eingerichtet, an welchen die Stirnseiten 8 der Begrenzungen der Kühlkanäle 2 mit dem Kühlmittelverteiler 3 in Kontakt stehen. Klebstoff 11 ist im Aufnahmebereich 4 des Kühlmittelverteilers 3 lediglich radial außerhalb der Kontaktflächen 9 angebracht. Die Klebeflächen sind in den Figuren jeweils quer-gestreift dargestellt.

In Fig. 2 sind die Stirnseiten 8 der Begrenzungen der Kühlkanäle 2 zweistufig ausgebildet, mit einer Stufentiefe t zwischen jeweils einer radial innenliegenden Stufe 15 und einer radial außenliegenden Stufe. Die Kontaktflächen 9 sind an den radial innenliegenden Stufen 15 der Stirnseiten 8 der Begrenzungen der Kühlkanäle 2 ausgebildet. Die radial innenliegenden Stufen 15 der Stirnseiten 8 der Begrenzungen der Kühlkanäle 2 liegen tiefer in den Kühlkanälen 2 als die radial außenliegenden Stufen.

Der Aufnahmebereich 4 des Kühlmittelverteilers 3 umgreift lediglich die außenliegenden Stufen der Stirnseiten 8 der Begrenzungen der Kühlkanäle 2 sowohl von innen als auch von außen.

Innerhalb des Aufnahmebereiches 4 des Kühlmittelverteilers 3 ist an der Außenseite 7 und der Stirnseite 8 der Begrenzungen der Kühlkanäle 2 des Kühlkörpers 1 sowie an der Innenseite 14 der außenliegenden Stufen der Stirnseiten 8 der Begrenzungen der Kühlkanäle 2 Klebstoff 11 angebracht.

Die äußeren Spalten S1 zwischen dem Aufnahmebereich 4 und den Außenseiten 7 der Begrenzungen der Kühlkanäle 2 sind breiter als die inneren Spalten S2 zwischen dem Aufnahmebereich 4 und den Innenseiten der außenliegenden Stufen 14 der Stirnseiten 8 der Begrenzungen der Kühlkanäle 2. Zusätzlich weist der Aufnahmebereich 4 mit Klebstoff 11 gefüllte stirnseitige Spalten S3 zu den Stirnseiten 8 der Begrenzungen der Kühlkanäle 2 hin auf.

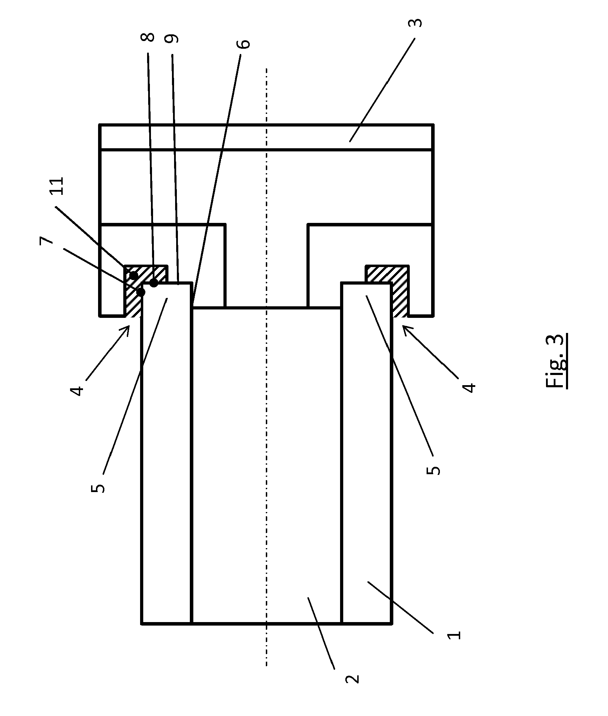

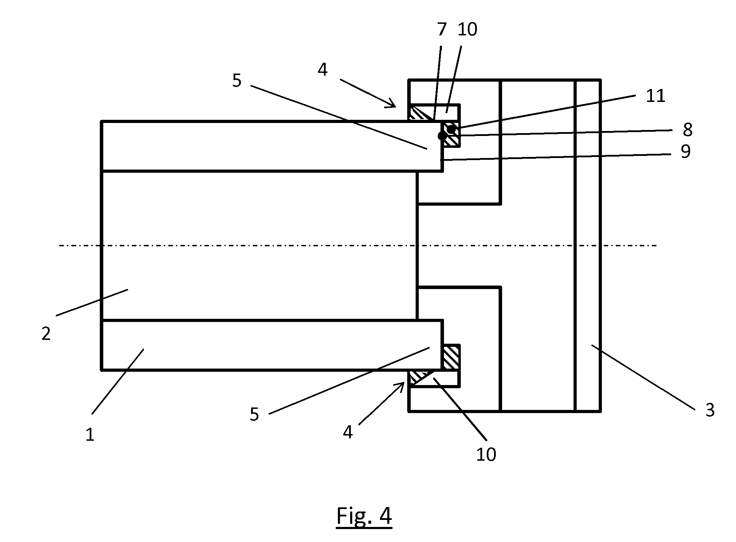

Die Fig. 3 und Fig. 4 zeigen Ausführungen einer Kühlvorrichtung wobei die Stirnseiten 8 der Begrenzungen der Kühlkanäle 2 nur einstufig ausgebildet sind, die Fig. 5 zeigt eine Ausführung mit zweistufigen Stirnseiten 8 der Begrenzungen der Kühlkanäle 2.

In der Fig. 4 ist eine von der Fig. 3 verschiedene Ausführungsform oder die selbe Ausführungsform der Fig. 3 jedoch in einer anderen Schnitthöhe dargestellt. Es sind Rippen 10 (bzw. Stege), jeweils zur Außenseite der Begrenzungen des Kühlkanals 7 hin, am Kühlmittelverteiler 3 ausgebildet. Durch die Rippen 10 wird ein vorbestimmter Abstand zwischen der Außenseite des Kühlkörpers 7 und einer Innenfläche des Kühlmittelverteilers 3 definiert. Es verbleibt dabei ein bestimmter Abstand zwischen den Rippen 10, so dass die Hohlräume mit Klebstoff 11 ausgefüllt werden können. Der Klebstoff 11 kann auf diese Weise Kräfte die auf Grund des Druckes vorherrschen besonders gut aufnehmen, insbesondere da der Klebstoff 11 auf Scherung beansprucht wird. An der Innenfläche des Kühlmittelverteilers 3 können entlang verschiedener Schnitthöhen mehrere derartige Rippen 10 ausgebildet sein. Jeweils zwischen den Rippen 10 bzw. außerhalb der Rippen 10 wird der Klebstoff 11 angebracht.

In ähnlicher Weise zeigt die Fig. 5 eine weitere verschiedene Ausführungsform. Die Rippe 10 ist in der dargestellten Höhe zu einer Innenseite (14) der außenliegenden Stufen der Begrenzungen des Kühlkanals (2) weisend am Kühlmittelverteiler 3ausgebildet. Es können, wie zur Fig. 4 beschrieben, mehrere Rippen 10 in verschiedenen Höhen angeordnet sein, wobei bevorzugt jeweils die nach außen weisenden Enden der Rippen 10 abgeschrägt oder außen verkürzt ausgeführt sind.

Die außenseitigen und innenseitigen Rippen 10 entsprechend der Fig. 4 und Fig. 5 können in einer weiteren Ausführungsform natürlich auch auf selber Schnitthöhe angeordnet sein.

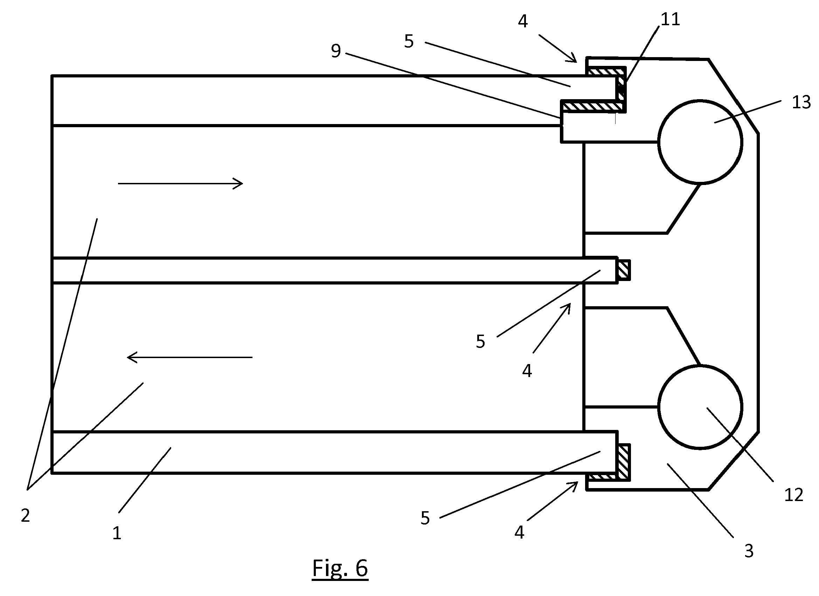

Fig. 6 zeigt eine weitere Schnittansicht einer erfindungsgemäßen Kühlvorrichtung entsprechend C-C der Fig. 5, also in einer Seitenansicht wie Fig. 1, jedoch geschnitten. Der Kühlkörper 1 weist 2 Kühlkanäle 2 auf. Ein Vorlauf 12 und ein Rücklauf 13 des Kühlmittelverteilers 3, die jeweils mit einem Kühlkanal 2 des Kühlkörpers 1 fluidleitend verbunden sind, sind dargestellt. An den Außenseiten 7 und Stirnseiten 8 der Begrenzungen der Kühlkanäle 2 ist Klebstoff 11 angeordnet, nicht jedoch radial innerhalb der Kontaktflächen 9. Zusätzlich sind teilweise Klebeflächen an den Stirnseiten 8 der Begrenzungen der Kühlkanäle 2 vorgesehen, wobei der Klebstoff 11 vorzugsweise in einer umlaufenden Nut des Kühlmittelverteilers 3 angeordnet ist.

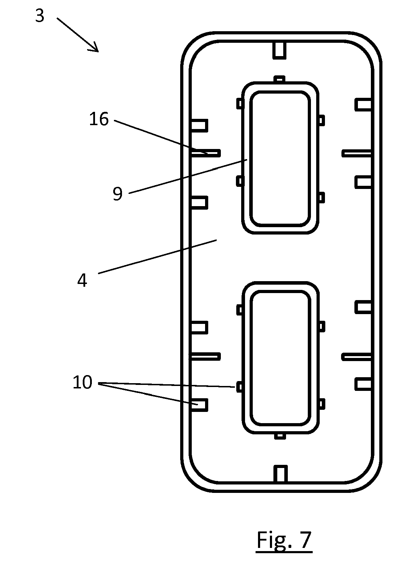

Fig. 7 stellt einen Schnitt durch einen Kühlmittelverteiler 3 gem. B-B der Fig. 1 dar. Der gesamte Aufnahmebereich 4 kann mit Klebstoff 11 gefüllt sein. Stege bzw. Rippen 10 dienen der seitlichen Positionierung der Kühlkanäle, zudem sind Endanschläge 16 zur stirnseitigen Positionierung der Kühlkanäle entlang des Bodens des Aufnahmebereiches 4 eingerichtet, wobei die Endanschläge 16 nicht über die gesamte Breite des Aufnahmebereiches 4 geführt sind, um Leckagen über durchgehende, ins Freie führende Ausformungen am Kühlmittelverteiler 3 zu verhindern.

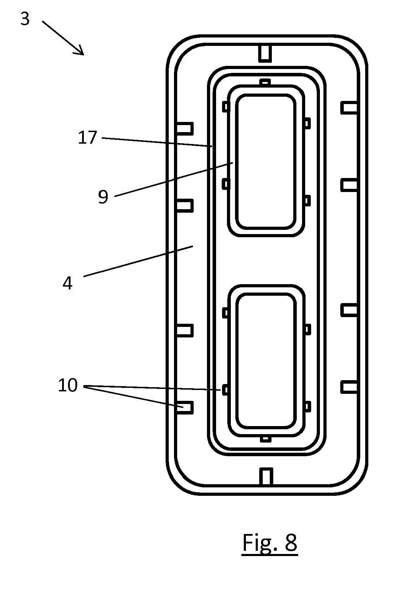

Alternativ zu den Endanschlägen 16 der Fig. 7 kann, wie in Fig. 8 dargestellt, eine umlaufende Nut 17 im Boden des Aufnahmebereiches 4 angeordnet und mit Klebstoff gefüllt sein, um eine Barriere zum Schutz vor Leckagen zu bilden. Der Boden beiderseits der umlaufenden Nut 17 bildet dann einen Endanschlag für die Begrenzungen der Kühlkanäle.

Die Erfindung gibt somit ein verbessertes Fahrzeugbatteriesystem umfassend eine Kühlvorrichtung zur Kühlung der Fahrzeugbatterie an, mit einer fluiddichten Verbindung zwischen Kühlkörper und Kühlmittelverteiler die leicht herstellbar ist und dabei eine gute Funktionalität der Kühlvorrichtung gewährleistet

### Bezugszeichenliste

- 1: Kühlkörper
- 2: Kühlkanal
- 3: Kühlmittelverteiler
- 4: Aufnahmebereich
- 5: Anschlussende
- 6: Innenseite der Begrenzung des Kühlkanals
- 7: Außenseite der Begrenzung des Kühlkanals
- 8: Stirnseite der Begrenzung des Kühlkanals
- 9: Kontaktfläche
- 10: Rippe oder Steg
- 11: Klebstoff
- 12: Vorlauf Kühlmittelverteiler
- 13: Rücklauf Kühlmittelverteiler
- 14: Innenseite der außenliegenden Stufe
- 15: radial innenliegende Stufe der Stirnseite der Begrenzung des Kühlkanals
- 16: Endanschlag
- 17: umlaufende Nut
- S1: äußerer Spalt
- S2: innerer Spalt
- S3: stirnseitiger Spalt
- t: Stufentiefe

## Patentansprüche

1. Fahrzeugbatteriesystem umfassend eine Fahrzeugbatterie mit mehreren Batteriezellen und eine Kühlvorrichtung zur Kühlung der Fahrzeugbatterie, wobei die Kühlvorrichtung einen Kühlkörper (1) mit zumindest einem Kühlkanal (2) zur Durchströmung mit einem Kühlmittel umfasst, wobei der Kühlkörper (1) mit den Batteriezellen in thermischem Kontakt steht, so dass Wärme von den Batteriezellen auf den Kühlkörper (1) übertragbar ist, wobei an zumindest einem Ende des Kühlkörpers (1) ein Kühlmittelverteiler (3) vorgesehen ist, wobei der Kühlmittelverteiler (3) mit dem Kühlkörper (1) verklebt ist, wobei der Kühlmittelverteiler (3) zur Verklebung mit dem Kühlkörper (1) einen Aufnahmebereich (4) aufweist, wobei im Aufnahmebereich (4) Klebstoff (11) angebracht ist, wobei der Aufnahmebereich (4) des Kühlmittelverteilers (3) Anschlussenden (5) des Kühlkörpers (1) umgreift, wobei die Anschlussenden (5) des Kühlkörpers (1) durch Begrenzungen des Kühlkanals (2) des Kühlkörpers (1) gebildet werden, wobei die Stirnseiten (8) der Begrenzungen des Kühlkanals (2) Anschläge für den Kühlmittelverteiler (3) bilden, sodass die Begrenzungen des Kühlkanals (2) an Kontaktflächen (9) am Kühlmittelverteiler (3) anliegen, wobei Klebstoff (11) im Aufnahmebereich (4) des Kühlmittelverteilers (3) lediglich, in Bezug auf den Kühlkanal (2), radial außerhalb der Kontaktflächen (9) angebracht ist,
**dadurch gekennzeichnet, dass** die Stirnseiten (8) der Begrenzungen des Kühlkanals (2) radial zweistufig ausgebildet sind und die Kontaktflächen (9) an den radial innenliegenden Stufen (15) der Stirnseiten (8) der Begrenzungen des Kühlkanals (2) ausgebildet sind.

2. Fahrzeugbatteriesystem nach Anspruch 1,
**dadurch gekennzeichnet, dass** die radial innenliegenden Stufen (15) der Stirnseiten (8) der Begrenzungen des Kühlkanals (2) tiefer im Kühlkanal (2) liegen als die radial außenliegenden Stufen.

3. Fahrzeugbatteriesystem nach Anspruch 2,
**dadurch gekennzeichnet, dass** der Aufnahmebereich (4) des Kühlmittelverteilers (3) lediglich die außenliegenden Stufen der Stirnseiten (8) der Begrenzungen des Kühlkanals (2) sowohl von innen als auch von außen umgreift.

4. Fahrzeugbatteriesystem nach Anspruch 3,
**dadurch gekennzeichnet, dass** Klebstoff (11) innerhalb des Aufnahmebereichs (4) des Kühlmittelverteilers (3) an der Außenseite (7) und/oder der Stirnseite (8) der Begrenzungen des Kühlkanals (2) des Kühlkörpers (1) angebracht ist und an der Innenseite (14) der außenliegenden Stufen der Stirnseiten (8) der Begrenzungen des Kühlkanals (2).

5. Fahrzeugbatteriesystem nach Anspruch 4,
**dadurch gekennzeichnet, dass** die äußeren Spalten (S1) zwischen den Außenseiten (7) der Begrenzungen des Kühlkanals (2) und den benachbarten Begrenzungen des Aufnahmebereichs (4) des Kühlmittelverteilers (3) breiter sind, als die inneren Spalten (S2) zwischen den Innenseiten (14) der außenliegenden Stufen der Begrenzungen des Kühlkanals (2) und den benachbarten Begrenzungen des Aufnahmebereichs (4) des Kühlmittelverteilers (3).

6. Fahrzeugbatteriesystem nach zumindest einem der Ansprüche 2 bis 5,
**dadurch gekennzeichnet, dass** der Aufnahmebereich (4) des Kühlmittelverteilers (3) Rippen (10) oder Stege zur Außenseite (7) und/oder zur Stirnseite (8) und/oder zu Innenseiten (14) der außenliegenden Stufen der Begrenzungen des Kühlkanals (2) hin aufweist.

7. Fahrzeugbatteriesystem nach Anspruch 6
**dadurch gekennzeichnet, dass** nach außen weisende Enden der Rippen (10) oder Stege schräg und/ oder verkürzt ausgeführt sind.

8. Fahrzeugbatteriesystem nach zumindest einem der zuvor genannten Ansprüche,
**dadurch gekennzeichnet, dass** der Kühlkörper (1) plattenförmig ausgebildet ist.

9. Fahrzeugbatteriesystem nach zumindest einem der zuvor genannten Ansprüche,
**dadurch gekennzeichnet, dass** der Kühlkörper (1) aus Aluminium besteht.

10. Fahrzeugbatteriesystem nach Anspruch 9,
**dadurch gekennzeichnet, dass** zumindest ein Ende des Kühlkörpers (1) welches mit dem Kühlmittelverteiler (3) verklebt ist zumindest bereichsweise mit einer polyester-basierenden Lackbeschichtung versehen ist.

11. Fahrzeugbatteriesystem nach zumindest einem der zuvor genannten Ansprüche,
**dadurch gekennzeichnet, dass** der Kühlmittelverteiler (3) aus Kunststoff besteht.

12. Fahrzeugbatteriesystem nach zumindest einem der zuvor genannten Ansprüche,
**dadurch gekennzeichnet, dass** der Kühlmittelverteiler (3) als Spritzgussteil ausgeführt ist.

## Claims

1. A vehicle battery system comprising a vehicle battery with a plurality of battery cells and a cooling device for cooling the vehicle battery, wherein the cooling device comprises a heat sink (1) with at least one cooling duct (2) for a coolant to flow through, wherein the heat sink (1) is in thermal contact with the battery cells, so that heat can be transmitted from the battery cells to the heat sink (1), wherein a coolant distributor (3) is provided at at least one end of the heat sink (1), wherein the coolant distributor (3) is glued to the heat sink (1), wherein the coolant distributor (3) has a receiving region (4) for gluing to the heat sink (1), wherein adhesive (11) is applied in the receiving region (4), wherein the receiving region (4) of the coolant distributor (3) surrounds connection ends (5) of the heat sink (1), wherein the connection ends (5) of the heat sink (1) are formed by limits to the cooling duct (2) of the heat sink (1), wherein the end faces (8) of the limits to the cooling duct (2) form stops for the coolant distributor (3), so that the limits to the cooling duct (2) lie against contact faces (9) on the coolant distributor (3), wherein adhesive (11) is applied in the receiving region (4) of the coolant distributor (3) merely, with regard to the cooling duct (2), radially outside the contact faces (9),
**characterised in that** the end faces (8) of the limits to the cooling duct (2) are formed in two tiers in the radial direction and the contact faces (9) are formed on the radially inner tiers (15) of the end faces (8) of the limits to the cooling duct (2).

2. A vehicle battery system according to Claim 1,
**characterised in that** the radially inner tiers (15) of the end faces (8) of the limits to the cooling duct (2) lie deeper in the cooling duct (2) than the radially outer tiers.

3. A vehicle battery system according to Claim 2,
**characterised in that** the receiving region (4) of the coolant distributor (3) surrounds merely the outer tiers of the end faces (8) of the limits to the cooling duct (2) both from the inside and from the outside.

4. A vehicle battery system according to Claim 3,
**characterised in that** adhesive (11) is applied within the receiving region (4) of the coolant distributor (3) on the outside (7) and/or the end face (8) of the limits to the cooling duct (2) of the heat sink (1) and on the inside (14) of the outer tiers of the end faces (8) of the limits to the cooling duct (2).

5. A vehicle battery system according to Claim 4,
**characterised in that** the outer gaps (S1) between the outsides (7) of the limits to the cooling duct (2) and the adjacent limits to the receiving region (4) of the coolant distributor (3) are wider than the inner gaps (S2) between the insides (14) of the outer tiers of the limits to the cooling duct (2) and the adjacent limits to the receiving region (4) of the coolant distributor (3).

6. A vehicle battery system according to at least one of Claims 2 to 5, **characterised in that** the receiving region (4) of the coolant distributor (3) has ribs (10) or lands towards the outside (7) and/or towards the end face (8) and/or towards insides (14) of the outer tiers of the limits to the cooling duct (2).

7. A vehicle battery system according to Claim 6,
**characterised in that** outward-pointing ends of the ribs (10) or lands are designed to be oblique and/or shortened.

8. A vehicle battery system according to at least one of the previously named claims,
**characterised in that** the heat sink (1) is plate-shaped.

9. A vehicle battery system according to at least one of the previously named claims,
**characterised in that** the heat sink (1) consists of aluminium.

10. A vehicle battery system according to Claim 9,
**characterised in that** at least one end of the heat sink (1) which is glued to the coolant distributor (3) is provided at least in regions with a polyester-based lacquer coating.

11. A vehicle battery system according to at least one of the previously named claims,
**characterised in that** the coolant distributor (3) consists of plastics material.

12. A vehicle battery system according to at least one of the previously named claims,
**characterised in that** the coolant distributor (3) is embodied as an injection-moulded part.

## Revendications

1. Système de batterie de véhicule, comprenant une batterie de véhicule ayant plusieurs cellules de batterie et un dispositif de refroidissement pour refroidir la batterie de véhicule, le dispositif de refroidissement comprenant un corps de refroidissement (1) avec au moins un canal de refroidissement (2) pour la circulation d'un réfrigérant, le corps de refroidissement (1) étant en contact thermique avec les cellules de batterie de manière à permettre le transfert de chaleur des cellules de batterie au corps de refroidissement (1), un répartiteur de réfrigérant (3) étant prévu à au moins une extrémité du corps de refroidissement (1), le répartiteur de réfrigérant (3) étant collé au corps de refroidissement (1), le répartiteur de réfrigérant (3) présentant une zone de réception (4) pour le collage avec le corps de refroidissement (1), un adhésif (11) étant appliqué dans la zone de réception (4), la zone de réception (4) du répartiteur de réfrigérant (3) entourant des extrémités de connexion (5) du corps de refroidissement (1), les extrémités de connexion (5) du corps de refroidissement (1) étant formées par des limites du canal de refroidissement (2) du corps de refroidissement (1), les faces frontales (8) des limites du canal de refroidissement (2) formant des butées pour le répartiteur de réfrigérant (3), si bien que les limites du canal de refroidissement (2) reposent contre des surfaces de contact (9) sur le répartiteur de réfrigérant (3), l'adhésif (11) n'étant appliqué dans la zone de réception (4) du répartiteur de réfrigérant (3) que radialement à l'extérieur des surfaces de contact (9) par rapport au canal de refroidissement (2),
**caractérisé en ce que** les faces frontales (8) des limites du canal de refroidissement (2) sont constituées de deux étages radiaux, et **en ce que** les surfaces de contact (9) sont formées sur les étages (15) radialement intérieurs des faces frontales (8) des limites du canal de refroidissement (2).

2. Système de batterie de véhicule selon la revendication 1, **caractérisé en ce que** les étages (15) radialement intérieurs des faces frontales (8) des limites du canal de refroidissement (2) s'engagent plus profondément dans le canal de refroidissement (2) que les étages radialement extérieurs.

3. Système de batterie de véhicule selon la revendication 2, **caractérisé en ce que** la zone de réception (4) du répartiteur de réfrigérant (3) n'entoure de l'intérieur et de l'extérieur que les étages extérieurs des faces frontales (8) des limites du canal de refroidissement (2).

4. Système de batterie de véhicule selon la revendication 3, **caractérisé en ce que** l'adhésif (11) est appliqué à l'intérieur de la zone de réception (4) du répartiteur de réfrigérant (3) sur la face extérieure (7) et/ou la face frontale (8) des limites du canal de refroidissement (2) du corps de refroidissement (1) et sur la face intérieure (14) des étages extérieurs des faces frontales (8) des limites du canal de refroidissement (2).

5. Système de batterie de véhicule selon la revendication 4, **caractérisé en ce que** les fentes extérieures (S1) entre les faces extérieures (7) des limites du canal de refroidissement (2) et les limites contiguës de la zone de réception (4) du répartiteur de réfrigérant (3) sont plus larges que les fentes intérieures (S2) entre les faces intérieures (14) des étages extérieurs des limites du canal de refroidissement (2) et les limites contiguës de la zone de réception (4) du répartiteur de réfrigérant (3).

6. Système de batterie de véhicule selon au moins une des revendications 2 à 5, **caractérisé en ce que** la zone de réception (4) du répartiteur de réfrigérant (3) comporte des nervures (10) ou des arêtes vers la face extérieure (7) et/ou vers la face frontale (8) et/ou vers les faces intérieures (14) des étages extérieurs des limites du canal de refroidissement (2).

7. Système de batterie de véhicule selon la revendication 6, **caractérisé en ce que** les extrémités dirigées vers l'extérieur des nervures (10) ou des arêtes sont prévues obliques et/ou raccourcies.

8. Système de batterie de véhicule selon au moins l'une des revendications précédentes, **caractérisé en ce que** le corps de refroidissement (1) est prévu en forme de plaque.

9. Système de batterie de véhicule selon au moins l'une des revendications précédentes, **caractérisé en ce que** le corps de refroidissement (1) est en aluminium.

10. Système de batterie de véhicule selon la revendication 9, **caractérisé en ce qu'**au moins une extrémité du corps de refroidissement (1) collée au répartiteur de réfrigérant (3) est pourvue au moins partiellement d'un revêtement de vernis à base de polyester.

11. Système de batterie de véhicule selon au moins l'une des revendications précédentes, **caractérisé en ce que** le répartiteur de réfrigérant (3) est en matière plastique.

12. Système de batterie de véhicule selon au moins l'une des revendications précédentes, **caractérisé en ce que** le répartiteur de réfrigérant (3) est réalisé comme pièce moulée par injection.
